# EUROPEAN PATENT APPLICATION

(11) **EP 2 017 528 A1**
(43) Date of publication of application: **21.01.2009**
(21) Application number: 07742594.0
(22) Date of filing: 27.04.2007
(51) Int. Cl.: F23C 3/00, A01G 9/24, F23C 99/00, F23D 11/24

(54) **COMBUSTOR OF HYDROCARBON BASED FUEL AND DEVICE COMPRISING COMBUSTOR OF HYDROCARBON BASED FUEL AS HEAT GENERATION SOURCE**

(30) Priority: 01.05.2006 JP 2006127749
(71) Applicant: Shinka Co. Ltd., Beppu-shi Oita 874-0847 (JP)
(72) Inventor: YAMAMOTO, Kazunori, Saga-shi, Saga 840-0850 (JP); YAMAMOTO, Tokuzo, Saga-shi, Saga 840-0850 (JP)
(74) Representative: Reinhard - Skuhra - Weise & Partner GbR
(86) International application number: PCT/JP2007/059159
(87) International publication number: WO 2007/129604

(57) **Abstract**

The present invention is configured such that a combustion furnace has a length long enough to place a position of a tip of a flame further inside therein than a position of the other end thereof and also to provide a predetermined distance between the position of the tip of the flame and the position of the other end, an inner diameter of the combustion furnace takes a value not smaller than the minimum value in such a range that does not come into contact with the flame but a value thereabout, and a fluid passage of oxygen-containing gas is restricted to be narrow at one or a plurality of places in an area from the tip of the flame within the combustion furnace to an exhaust port.

## Description

### Technical Field

The present invention relates to a combustion apparatus for a hydrocarbon based fuel and a device provided with the same as a heat generating source. In particular, the present invention relates to a combustion apparatus for a hydrocarbon based fuel capable of effectively utilizing the hydrocarbon based fuel by completely burning the fuel and a device provided with the same as a heat generating source.

### Background Art

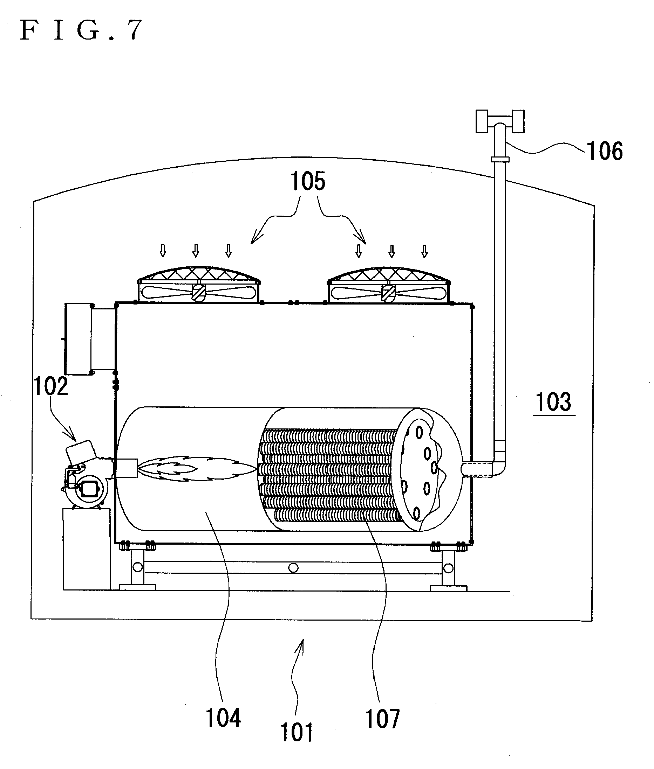

In a warm air boiler 101 for heating the inside of, for example, a horticultural greenhouse with warm air, conventionally, an injection nozzle of a gun type burner 102 is combusted within a combustion furnace 104 having a large bore, the inside of the combustion furnace 104 is brought into a high temperature condition by combustion gas filled in the combustion furnace 104, the high temperature combustion exhaust gas is passed through inside a pipe of a heat exchanger 107, and warm air heat-exchanged by applying air to the combustion furnace 104 and the heat exchanger 107 by an air blower fan 105 is delivered into a greenhouse 103, as shown in FIG. 7. Heat-exchanged exhaust gas within the combustion furnace 104 is discharged outside the greenhouse by a smokestack 106 (see reference literature 1).

Patent Literature 1: Japanese Published Unexamined Patent Application No. 2002-34355

### Disclosure of the Invention

### Problems to be Solved by the Invention

However, the combustion furnace is configured to have a large bore in the aforementioned warm air boiler in order to increase a heat exchange rate. When a liquid fuel is jetted in a mist form by the nozzle to be burned in the gun type burner, a significant amount of the liquid fuel is not burned and adheres to an inner surface of the combustion furnace, thereupon leading to an incomplete combustion state. Thus, poisonous gas such as carbon monoxide, volatilized unburned substances, etc., are to be discharged outside the greenhouse, and toxic substances may be discharged into the air, which can adversely affect the environment. Still more, discharging such exhaust gas inside the greenhouse can be noxious to the growth of plants, do harm to the health of workers in the greenhouse, and cause a carbon monoxide poisoning accident.

Further, outer surfaces of the combustion furnace and the heat exchanger are heat-exchanged by air blowing of the fan in the aforementioned warm air boiler. Since the combustion gas is discharged to the outside air from the smokestack at a high temperature state, the heat exchange rate is remarkably low and fuel efficiency is very poor.

Further, some sauna heating systems have such a structure that achieves complete combustion and improves heat exchange efficiency by making an exhaust pipe be of a meandering structure. However, a flame injection nozzle of the burner usable in the systems is limited to be small in size. It is estimated that a temperature inside the furnace takes on a value at most around 400°C. Further, it has been confirmed by the present inventors that forcedly enlarging the size of the flame injection nozzle causes black smoke and a complete combustion state becomes unmaintainable.

The present invention was invented in view of the aforementioned aspect, and accordingly it is an object of the present invention to provide a combustion apparatus for a hydrocarbon based fuel capable of effectively utilizing combustion gas by making combustion by a gun type burner into complete combustion and a device provided with the same as a heat generating source.

### Means for Solving the Problems

In order to achieve the aforementioned object, a combustion apparatus for a hydrocarbon based fuel according to the present invention including: a burner having a flame injector that is supplied with fuel from a fuel source and has a front distal end mounted with a flame injection nozzle, an air blower that delivers oxygen-containing gas composed of oxygen or gas that contains oxygen, and an air blowing pipe that extends forward from the air blower concentrically to an axis direction of the flame injection nozzle while enclosing the flame injector, a flame being injected from the flame injection nozzle; and a cylindrical combustion furnace having one end that is coupled to the burner and the other end or a vicinity of the other end that is provided with an exhaust port is configured such that the air blower delivers the oxygen-containing gas only into the combustion furnace through the air blowing pipe, the flame injector injects the flame only into the combustion furnace, the oxygen-containing gas having been delivered from the air blower is discharged only from the exhaust port, the combustion furnace has a length long enough to place a position of a tip of the flame further inside therein than a position of the exhaust port and to provide a predetermined distance between the position of the tip of the flame and the position of the exhaust port, an inner diameter of the combustion furnace takes a value not smaller than the minimum value in such a range that does not come into contact with the flame but a value thereabout, and a fluid passage of the oxygen-containing gas is restricted to be narrow at one or a plurality of places in an area from the tip of the flame within the combustion furnace to the exhaust port.

Herein, four effects below can be obtained and the aforementioned problems are solved by adopting the configuration that the inner diameter of the combustion furnace takes a value not smaller than the minimum value in such a range that does not come into contact with the flame but a value thereabout, whereupon the hydrocarbon based fuel is burned within the combustion furnace being a narrow space. More specifically, first, even if a significant amount of a liquid fuel is not burned and adheres to an inner surface of the combustion furnace at the time when the liquid fuel is jetted in a mist form from the nozzle by the gun type burner to be burned, the inner surface of the combustion furnace is near the flame and high in temperature, so that the adhering liquid fuel is immediately vaporized and ignited on the spot, thereupon being subjected to combustion. Second, in the conventional combustion furnace with a large bore, some of the oxygen-containing gas having been delivered from the burner may pass through a place far away from the flame and be discharged outside the furnace without being used for combustion at all while an oxygen concentration in the vicinity of the flame becomes low since oxygen in the oxygen-containing gas passing through the vicinity of the flame is burned off rapidly. On the contrary, in the present invention, the oxygen-containing gas having been delivered from the burner all passes through near the flame, so that an oxygen concentration in the vicinity of the flame is kept high compared with that of the conventional combustion furnace with a large bore. Accordingly, a use efficiency of oxygen for combustion is to be improved significantly. Third, since the interior of the combustion furnace is a narrow space, the temperature inside the combustion furnace easily becomes high, which further facilitates complete combustion. Fourth, in addition to that a temperature inside the combustion furnace easily becomes high by the third effect, as an effect associated with the second effect, generation of not only poisonous gas such as carbon monoxide, volatilized unburned substances, etc., but also toxic substances such as NOx can be suppressed since the oxygen-containing gas having been delivered from the burner all passes through near the high-temperature flame and is heated high efficiently, thereby realizing a combustion state similar to a combustion state referred to as high temperature preheated air combustion and also achieving complete combustion even if an oxygen concentration is low.

Furthermore, the fluid passage of the oxygen-containing gas is configured to be narrowed at one or a plurality of places in the area from the tip of the flame within the combustion furnace to the exhaust port, whereby a flow of the oxygen-containing gas that flows inside the exhaust pipe is suppressed, an air pressure inside the combustion furnace is increased, the four effects as described in detail in the above [0009] are further promoted, and combustion under high temperature conditions where a furnace temperature is 800°C or more becomes possible. Accordingly, a complete combustion state and a high temperature preheated air combustion state can be maintained even if the flame injection nozzle size of the burner is enlarged. This allows generation of not only poisonous gas such as carbon monoxide, volatilized unburned substances, etc., but also NOx to be suppressed.

Further, in order to achieve the aforementioned object, the combustion apparatus for the hydrocarbon based fuel according to the present invention is configured such that a flow direction of the oxygen-containing gas at least in a part of the area from the tip of the flame within the combustion furnace to the exhaust port is substantially opposite to a delivery direction of the oxygen-containing gas by the air blower.

Herein, in addition to the configuration that the fluid passage of the oxygen-containing gas is restricted to be narrow at one or a plurality of places in the area from the tip of the flame within the combustion furnace to the exhaust port, the flow direction of the oxygen-containing gas at least in a part of the area from the tip of the flame within the combustion furnace to the exhaust port is configured to be substantially opposite to the delivery direction of the oxygen-containing gas by the air blower, whereby a flow of the oxygen-containing gas that flows inside the exhaust pipe is to be further suppressed, the four effects as described in detail in the above [0009] are further promoted, and combustion under high temperature conditions where a furnace temperature is 800°C or more becomes possible. Accordingly, a complete combustion state and a high temperature preheated air combustion state can be maintained even if the flame injection nozzle size of the burner is enlarged, and generation of not only poisonous gas such as carbon monoxide, volatilized unburned substances, etc., but also NOx can be suppressed with greater ease.

Further, a temperature at an entire or part position of the vicinity of an inner wall inside the combustion furnace by means of the flame is configured to be 800°C or more, so that the hydrocarbon base fuel adhering to the inner surface of the combustion furnace without being burned at the time of being jetted in a mist form the nozzle to be burned is to be completely burned. As a result, generation of not only poisonous gas such as carbon monoxide, volatilized unburned substances, etc., but also NOx can be suppressed.

Further, the hydrocarbon based fuel is such that one or a plurality of kinds selected from among hydrocarbon based fuels composed of crude oil, heavy oil, kerosene, light oil, jet fuel, gasoline, naphtha, liquefied petroleum gas (LPG) and liquefied natural gas (LNG) are mixed. Marked effects can be obtained particularly when kerosene or light oil is used.

Further, a device provided with the above configured combustion apparatus for a hydrocarbon based fuel as a heat generating source includes a warm air boiler for a plastic greenhouse. The combustion gas exhausted from the combustion furnace is used as warm air at the same time, whereupon the amount of fuel usage can be greatly reduced.

### Effects of the Invention

The combustion apparatus for the hydrocarbon based fuel according to the present invention is configured such that the inner diameter of the combustion furnace takes a value not smaller than the minimum value in such a range that does not come into contact with the flame of the burner but a value thereabout and the fluid passage of the oxygen-containing gas is restricted to be narrow at one or a plurality of places in the area from the tip of the flame within the combustion furnace to the exhaust port. As a result, an interior air pressure of the combustion furnace is increased, and a combustion temperature inside the combustion furnace becomes 800°C or more, thereupon realizing a combustion state similar to a combustion state referred to as high temperature preheated air combustion and achieving complete combustion even if an oxygen concentration is low. Accordingly, generation of not only poisonous gas such as carbon monoxide, volatilized unburned substances, etc., but also toxic substances such as NOx can be suppressed.

Further, since the flow direction of the oxygen-containing gas at least in a part of the area from the tip of the flame within the combustion furnace to the exhaust port is substantially opposite to the delivery direction of the oxygen-containing gas by the air blower, the interior air pressure inside the combustion furnace is further effectively increased. Accordingly, a combustion state similar to a combustion state referred to as high temperature preheated air combustion is achieved, and complete combustion becomes possible even if an oxygen concentration is low.

Further, when the combustion apparatus for the hydrocarbon based fuel according to the present invention is provided as a warm air boiler, the combustion gas with generation of poisonous substances suppressed is discharged inside a plastic greenhouse as warm air, thereupon increasing a heat exchange rate and significantly improving fuel efficiency.

### Brief Description of the Drawings

FIG. 1 is a side explanatory diagram for showing an example of a combustion apparatus for a hydrocarbon based fuel to which the present invention is applied;
FIG. 2 is a side explanatory diagram for showing another example of the combustion apparatus for the hydrocarbon based fuel to which the present invention is applied;
FIG. 3 is a side explanatory diagram for showing an example of an installation constitution of an exhaust port in claim 1 of the combustion apparatus for the hydrocarbon based fuel to which the present invention is applied;
FIG. 4 is a side explanatory diagram for showing an example of an installation constitution of an exhaust port in claim 2 of the combustion apparatus for the hydrocarbon based fuel to which the present invention is applied;
FIG. 5 is a side explanatory diagram for showing an example of a warm air boiler provided with the combustion apparatus in FIG. 1;
FIG. 6 is a side explanatory diagram for showing another example of a warm air boiler provided with the combustion apparatus in FIG. 2; and
FIG. 7 is a side explanatory diagram for showing an example of a conventional warm air boiler.

### Description of Symbols

- 1: Combustion apparatus
- 2: Combustion furnace
- 3: One end
- 4: Burner
- 5: Flame injector
- 6: Air blower
- 7: Air blowing pipe
- 8: Other end
- 9: Exhaust pipe
- 10: Protruding portion
- 11: Warm air boiler
- 12: Combustion apparatus storage box
- 13: Air blowing fan
- 14: Warm air outlet
- 20: Flame injection nozzle
- 21: Exhaust port
- 22: Cover body

### Best Mode for Carrying Out the Invention

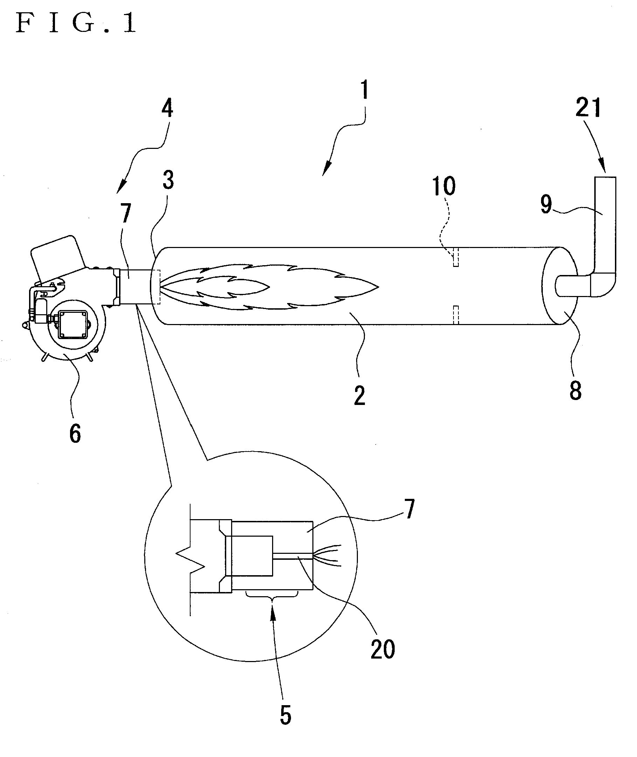

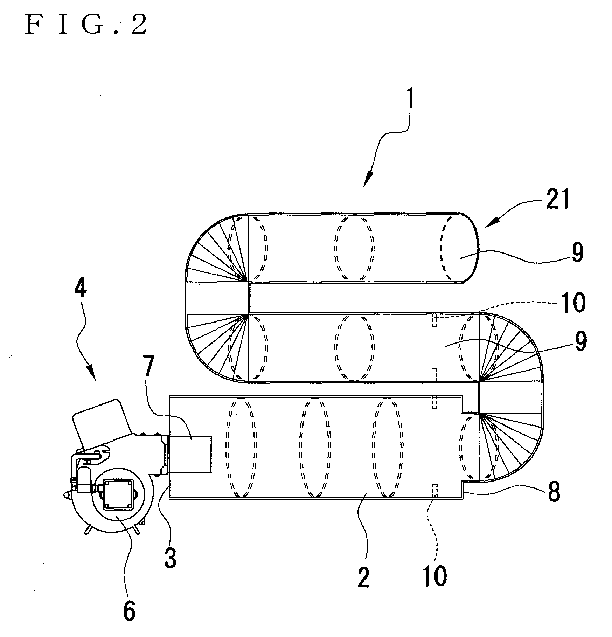

Hereinafter, embodiments of the present invention are described in consideration of the drawings and provided for understanding of the present invention.
Illustrated in FIG. 1 is an explanatory diagram for showing an example of a combustion apparatus for a hydrocarbon based fuel to which the present invention is applied, and illustrated in FIG. 2 is an explanatory diagram for showing another example of the combustion apparatus for the hydrocarbon based fuel to which the present invention is applied.

A combustion apparatus 1 shown herein is composed of a cylindrical combustion furnace 2 with 1500 mm in entire length and 250 mm in inner diameter and a gun type burner 4 coupled to one end 3 of the combustion furnace 2. The burner 4 is composed of a frame injector 5 that is supplied with fuel (for example, kerosene) from a fuel source and has a front distal end mounted with a frame injection nozzle 20, an air blower 6 that delivers oxygen-containing gas composed of oxygen or gas that contains oxygen, and an air blowing pipe 7 that extends forward from the air blower 6 concentrically to an axis direction of the flame injection nozzle 20 while enclosing the frame injector 5.

Herein, it is configured that only the flame injector 5 and the air blowing pipe 7 of the burner 4 are placed within the combustion furnace 2 at one end 3 of the combustion furnace 2, the flame injection nozzle 20 of the flame injector 5 is coupled while projecting toward the other end 8 of the combustion furnace 2 on a concentric axis of the combustion furnace 2, and the other end 8 of the combustion furnace 2 has an inner diameter of 100 mm and is coupled with an exhaust pipe 9 having an exhaust port 21 at an upper part.

Further, a protruding portion 10 for narrowing the fluid passage of the aforementioned oxygen-containing gas in an area from the tip of the flame injected from the flame injection nozzle 20 placed within the combustion furnace 2 to the other end of the combustion furnace 2 is projectingly provided along an inner circumferential surface of the combustion furnace 2.

Thus, the fluid passage of the oxygen-containing gas is to be restricted to be narrow by the protruding portion 10 and the exhaust pipe 9 coupled to the other end of the combustion furnace 2, within the area from the tip of the flame injected from the flame injection nozzle 20 placed within the combustion furnace 2 to the exhaust port 21.

Further, as shown in FIG. 2, only the flame injector and the air blowing pipe 7 of the burner 4 is placed within the combustion furnace 2 whose inner diameter is 300 mm, at one end 3 of the combustion furnace 2. The flame injection nozzle of the flame injector is coupled while projecting toward an open end of the combustion furnace 2 on the concentric axis of the combustion furnace 2. An exhaust pipe 9 having an inner diameter of 200 mm is coupled to the other end 8 of the combustion furnace 2, and is bent 180 degrees such that a flow direction of oxygen-containing gas flowing through the inside thereof and a flow direction of oxygen-containing gas flowing through the combustion furnace 2 become opposite, and is further bent 180 degrees such that a flow direction of oxygen-containing gas becomes opposite to the flow direction of the oxygen-containing gas flowing through the inside of the exhaust pipe 9. Additionally, protruding portions 10 for narrowing the fluid passage of the oxygen-containing gas in the area from the tip of the flame injected from the flame injection nozzle 20 placed within the combustion furnace 2 to the other end 8 of the combustion furnace 2 and the area of the exhaust pipe 9 are protrudingly provided along the inner circumferential surface of the combustion furnace 2 and the inner circumferential surface of the exhaust pipe 9.

Thus, the fluid passage of the oxygen-containing gas is restricted to be narrow by the exhaust pipe 9 coupled to the other end 8 of the combustion furnace 2 and the protruding portions 10, within the area from the tip of the flame injected from the flame injection nozzle placed within the combustion furnace 2 to the exhaust port 21. Further, the flow direction of the oxygen-containing gas at least in a part of the area from the tip of the flame within the combustion furnace to the exhaust port becomes substantially opposite to the delivery direction of the oxygen-containing gas by the air blower.

In the combustion apparatus 1 thus configured, the air blower 6 of the burner 4 delivers the oxygen-containing gas (air) only into the combustion furnace 2 through the air blowing pipe 7, the flame injector 5 injects a flame only into the combustion furnace 2, and combustion gas of the oxygen-containing gas and the flame is discharged from the exhaust port 21 of the exhaust pipe 9 coupled to the other end 8 of the combustion furnace 2.

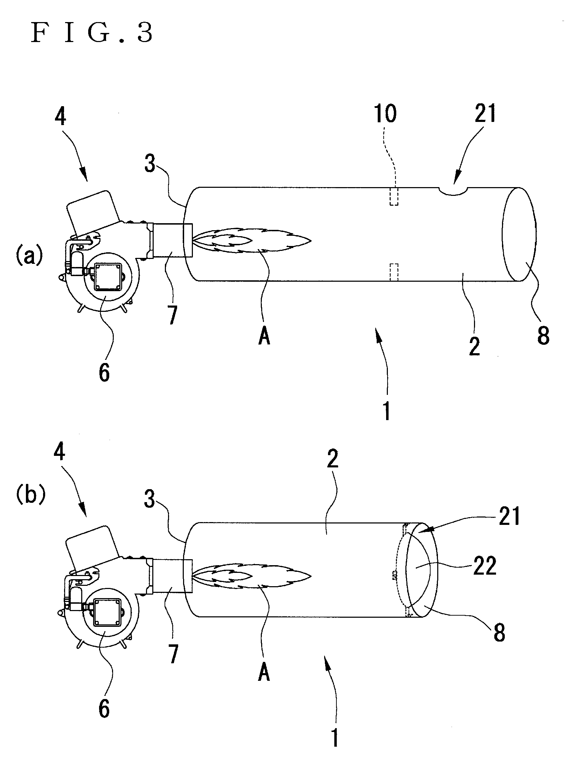

Further, as shown in FIG. 3(a), it may be configured that only the flame injector and the air blowing pipe 7 of the burner 4 are placed within the combustion furnace 2 at one end of the combustion furnace 2, the flame injection nozzle of the flame injector is coupled as projecting toward the other end 8 of the combustion furnace 2 on the concentric axis of the combustion furnace 2, the other end 8 is hermetically closed while an exhaust port 21 is opened on an outer wall surface of the combustion furnace 2 in the vicinity of the other end 8, and a protruding portion 10 for narrowing a fluid passage of the oxygen-containing gas in an area from the tip of the flame injected from the flame injection nozzle 20 placed within the combustion furnace 2 to the exhaust port 21 of the combustion furnace 2 is projectingly provided along the inner circumferential surface of the combustion furnace 2.

By this means, the oxygen-containing gas is to be discharged from the exhaust port 21 on the outer wall surface of the combustion furnace 2 in the vicinity of the other end 8. The fluid passage of the oxygen-containing gas is to be restricted to be narrow by the protruding portion 10 and the exhaust port 21 in the area from the tip of the flame injected from the flame injection nozzle placed within the combustion furnace 2 to the exhaust port 21.

Alternatively, as shown in FIG. 3(b), it may be configured that only the flame injector and the air blowing pipe 7 of the burner 4 are placed within the combustion furnace 2 at one end 3 of the combustion furnace 2, the flame injection nozzle of the flame injector is coupled as projecting toward the other end 8 of the combustion furnace 2 on the concentric axis of the combustion furnace 2, and a cover body 22 formed with an exhaust port 21 which the oxygen-containing gas is discharged from around is placed at an open end of the other end 8.

By this means, the oxygen-containing gas is to be discharged from the exhaust port 21 formed around the cover body 22 placed at the open end of the other end 8. The fluid passage of the oxygen-containing gas is to be restricted to be narrow in the area from the tip of the flame injected from the flame injection nozzle placed within the combustion furnace 2 to the exhaust port 21.

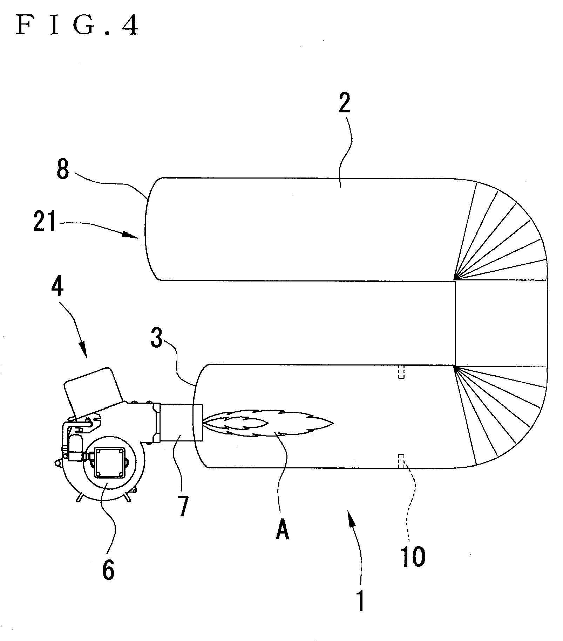

Further, as shown in FIG. 4, it may be configured that only the flame injector and the air blowing pipe 7 of the burner 4 are placed within the combustion furnace 2 at one end 3 of the combustion furnace 2, the flame injection nozzle of the flame injector is coupled as projecting toward the other end 8 of the combustion furnace 2 on the concentric axis of the combustion furnace 2, a flow direction of the oxygen-containing gas at least in a part of the area from the tip of the flame within the combustion furnace 2 to the exhaust port 21 at the other end 8 is formed as bent substantially 180 degrees so as to become substantially opposite to the delivery direction of the oxygen-containing gas by the air blower, and a protruding portion 10 for narrowing a fluid passage of the oxygen-containing gas in an area from the tip of the flame injected from the flame injection nozzle 20 placed within the combustion furnace 2 to the other end 8 of the combustion furnace 2 is projectingly provided along the inner circumferential surface of the combustion furnace 2.

By this means, the fluid passage of the oxygen-containing gas is to be restricted to be narrow by the protruding portion 10 in the area from the tip of the flame injected from the flame injection nozzle placed in the combustion furnace 2 to the exhaust port 21, and the flow direction of the oxygen-containing gas at least in a part of the area from the tip of the flame within the combustion furnace to the exhaust port is to become substantially opposite to the delivery direction of the oxygen-containing gas by the air blower.

Herein, an inner diameter of each combustion furnace 2 as shown above shall take a value not smaller than the minimum value in such a range that does not come into contact with a flame A injected from the flame injection nozzle but a value thereabout. An outer diameter of the flame A depends on a size of the flame injection nozzle, and for example, the inner diameter of the combustion furnace 2 when the size of the flame injection nozzle is 0.5 gal/h to 2.0 gal/h shall be within a range from 150 mm to 250 mm.

A length of the combustion furnace 2 is such that a position of the tip of the flame A is short of the other end 8 of the combustion furnace 2. More specifically, the length is preferably such that the tip of the flame A is positioned within two thirds of the entire length from the one end 3 of the combustion furnace 2. For example, the entire length of the combustion furnace 2 when the size of the flame injection nozzle is 0.5 gal/h to 2.0 gal/h shall be within a range from 600 mm to 4000 mm.

On the other hand, since the oxygen-containing gas delivered from the burner 4 all passes through near the flame, an oxygen concentration in the vicinity of the flame is kept high compared with the case of the conventional combustion furnace with a large bore, whereupon usage efficiency of oxygen for combustion is remarkably improved. Furthermore, since the interior of the combustion furnace is a narrow space, a temperature within the combustion furnace easily becomes high and complete combustion is further facilitated. Further, the oxygen-containing gas delivered by the air blower 6 all passes through near the high-temperature flame and is heated high efficiently, thereby realizing a combustion state similar to a combustion state referred to as a high temperature preheated air combustion and achieving complete combustion even if an oxygen concentration is low. Accordingly, generation of not only poisonous gas such as carbon monoxide, volatilized unburned substances, etc., but also toxic substances such as NOx can be suppressed.

Further, the fluid passage of the oxygen-containing gas is configured to be restricted to be narrow in the area from the tip of the flame within the combustion furnace 2 to the exhaust port 21, whereupon an air pressure inside the combustion furnace 2 is increased and combustion under high temperature conditions where a furnace temperature is 800°C or more becomes possible. Even if the flame injection nozzle size of the burner 4 is enlarged, a complete combustion state and a high temperature preheated air combustion state can be maintained. Consequently, generation of not only poisonous gas such as carbon monoxide, volatilized unburned substances, etc., but also NOx can be suppressed.

Further, in addition to the configuration that the fluid passage of the oxygen-containing gas is restricted to be narrow in the area from the tip of the flame within the combustion furnace 2 to the exhaust port 21, the flow direction of the oxygen-containing gas at least in a part of the area from the tip of the flame within the combustion furnace 2 to the exhaust port 21 is configured to become substantially opposite to the delivery direction of the oxygen-containing gas by the air blower 6, which leads to further suppression of the flow of the oxygen-containing gas flowing through the inside of the exhaust pipe 9. This further promotes an increase in air pressure inside the combustion furnace 2 and allows for combustion under a high temperature state where a furnace temperature is 800°C or more. Thus, even if the flame injection nozzle size of the burner 4 is enlarged, the complete combustion state and the high temperature preheated air combustion state can be maintained, so that generation of not only poisonous gas such as carbon monoxide, volatilized unburned substances, etc., but also NOx can be suppressed with greater ease.

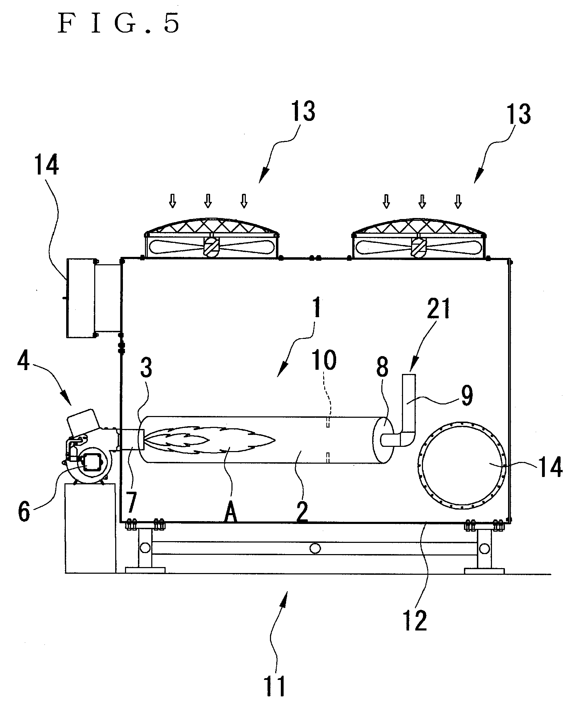

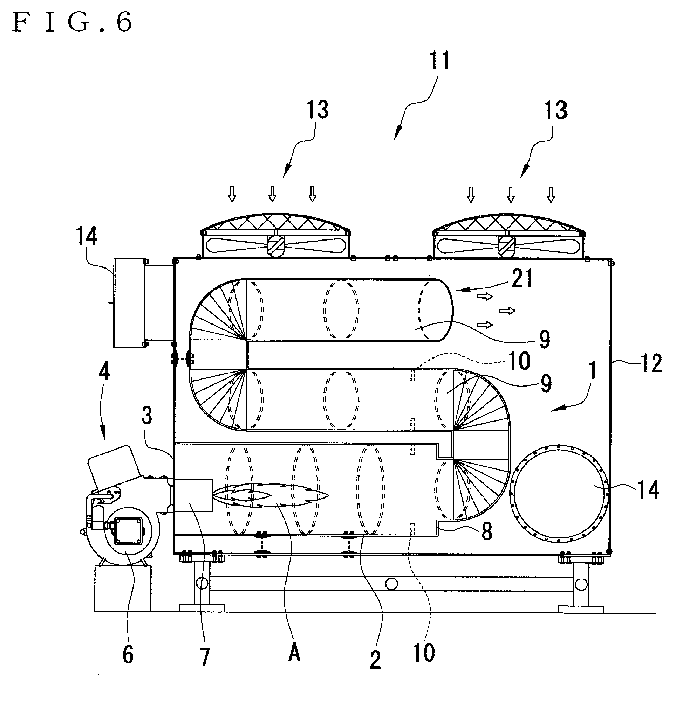

Subsequently, FIG. 5 is an explanatory diagram showing an example of a warm air boiler provided with a combustion apparatus for a hydrocarbon based fuel to which the present invention is applied, and FIG. 6 is an explanatory diagram showing another example of the warm air boiler provided with the combustion apparatus for the hydrocarbon based fuel to which the present invention is applied.

A warm air boiler 11 shown herein is composed of a combustion apparatus storage box 12 in which a combustion apparatus 1 shown in FIG. 1 or a combustion apparatus 1 shown in FIG. 2 is stored, an air blowing fan 13 provided at an upper end of the combustion apparatus storage box 12, and a warm air outlet 14 opened at a side of the combustion apparatus storage box 12.

In thus configured warm air boiler 11, the air outside the combustion apparatus storage box 12 is taken into the combustion apparatus storage box 12 from a suction side of the air blowing fan 13. The taken air is brought into contact with outer surfaces of the combustion furnace 2 and the exhaust pipe 9 of the combustion apparatus 1 thereupon being heat-exchanged, and warm air composed of a gaseous mixture of the combustion gas exhausted from the exhaust pipe 9 of the combustion apparatus 1 and the heat-exchanged air is delivered from the warm air outlet 14.

Now, a comparison test result of air blowing temperatures between a conventional warm air boiler as shown in FIG. 7 in which combustion gas from a combustion furnace is all discharged outside a plastic greenhouse from a smokestack and a warm air boiler of the present invention as shown in FIG. 6 in which combustion gas from a combustion furnace is all sent inside a plastic greenhouse is shown in Table 1 below.
In this instance, an injection nozzle at 4 gal/h was used in the conventional warm air boiler, and an injection nozzle at 1.2 gal/h was used in the warm air boiler of the present invention. The tests were conducted at an equal amount of air blown in both of the conventional warm air boiler and the warm air boiler of the present invention.

**[Table 1]**

| | Air blowing temperature for heating the inside of the plastic greenhouse |
|---|---|
| Conventional warm air boiler (Flame injection nozzle size: 4 gal/h) | 62°C |
| Warm air boiler of the present invention (Flame injection nozzle size: 1.2 gal/h) | 59°C |

From the comparison test result of the air blowing temperatures, it is found that the air blowing temperature of the warm air boiler of the present invention was only 3°C lower than that of the conventional warm air boiler in spite of using the flame injection nozzle having a size of 1.2 gal/h relative to the conventional flame injection nozzle having a size of 4 gal/h. It can be assumed that this is because combustion gas from the combustion furnace is all utilized as warm air thereupon increasing the heat exchange rate in the boiler of the present invention.

Further, a comparison test result of fuel use amounts and operation times per day when a setting temperature of the inside of a 300 tsubo (991.74 m²) plastic greenhouse for cultivating roses was set at 14°C by the conventional warm air boiler and the warm air boiler of the present invention is shown in Table 2 below.

**[Table 2]**

| | Setting temperature Fuel inside the greenhouse | use amount Fuel use amount per day | Operation time Operation time per day |
|---|---|---|---|
| Conventional warm air boiler (Flame injection nozzle size: 4 gal/h) | 14°C | 182 liters/day | 12 hours/day |
| Warm air boiler of the present invention (Flame injection nozzle size: 1.2 gal/h) | 14°C | 92 liters/day | 15 hours/day |

From the above test result, it is found that the fuel use amount per day of the warm air boiler of the present invention was 92 liters while that of the conventional warm air boiler was 182 liters and a reduction of the fuel use amount at about half became possible.

Subsequently, a comparison test result of combustion furnace temperatures between when a combustion furnace with 150 cm in length and 100 cm in inner diameter was used as the combustion furnace of the conventional warm air boiler and when a combustion furnace with 150 cm in length and 15 cm in inner diameter was used as the combustion furnace of the warm air boiler of the present invention is shown in Table 3 below.
A nozzle size of the burner in the both was 2.5 gal/h.

**[Table 3]**

| | Nozzle size | Combustion furnace size | Combustion furnace temperature |
|---|---|---|---|
| Conventional combustion furnace | 2.5 gal/h | 150 cm (length) × 100 cm (inner diameter) | 680°C |
| Combustion furnace of the present invention | 2.5 gal/h | 150 cm (length) × 15 cm (inner diameter) | 813°C |

From the above comparison test result, found was a situation that the temperature inside the conventional combustion furnace was 680°C and the combustion gas was too high in concentrations of not only poisonous gas such as carbon monoxide, volatilized unburned substances, etc., but also NOx to be used as warm air and accordingly the combustion gas must be discharged outside the plastic greenhouse from the smokestack.
On the contrary, the temperature inside the combustion furnace of the present invention was 813°C and poisonous gas such as carbon monoxide, volatilized unburned substances, etc., and NOx were not detected in the combustion gas, which allows the combustion gas to be delivered inside the plastic greenhouse as warm air.
From this, generation of poisonous gas such as carbon monoxide, volatilized unburned substances, etc., and NOx can be suppressed by configuring such that the inner diameter of the combustion furnace takes a value not smaller than the minimum value in such a range that does not come into contact with a flame from the burner but a value thereabout and the fluid passage of the oxygen-containing gas is restricted to be narrow in the area from the tip of the flame within the combustion furnace to the open end, thereupon increasing an air pressure inside the combustion furnace, thereby allowing for complete combustion of fuel (for example, kerosene) in the combustion furnace at 800°C or more.

## Claims

1. A combustion apparatus for a hydrocarbon based fuel comprising:
a burner having a flame injector that is supplied with fuel from a fuel source and has a front distal end mounted with a flame injection nozzle, an air blower that delivers oxygen-containing gas composed of oxygen or gas that contains oxygen, and an air blowing pipe that extends forward from the air blower concentrically to an axis direction of the flame injection nozzle while enclosing the flame injector, a flame being injected from the flame injection nozzle; and
a cylindrical combustion furnace having one end that is coupled to the burner and the other end or a vicinity of the other end that is provided with an exhaust port, wherein
the air blower delivers the oxygen-containing gas only into the combustion furnace through the air blowing pipe, the flame injector injects the flame only into the combustion furnace, the oxygen-containing gas having been delivered from the air blower is discharged only from the exhaust port,
the combustion furnace has a length long enough to place a position of a tip of the flame further inside therein than a position of the exhaust port and also to provide a predetermined distance between the position of the tip of the flame and the position of the exhaust port, an inner diameter of the combustion furnace takes a value not smaller than the minimum value in such a range that does not come into contact with the flame but a value thereabout, and
a fluid passage of the oxygen-containing gas is restricted to be narrow at one or a plurality of places in an area from the tip of the flame within the combustion furnace to the exhaust port.

2. The combustion apparatus for the hydrocarbon based fuel according to claim 1, wherein a flow direction of the oxygen-containing gas at least in a part of the area from the tip of the flame within the combustion furnace to the exhaust port is substantially opposite to a delivery direction of the oxygen-containing gas by the air blower.

3. The combustion apparatus for the hydrocarbon based fuel according to claim 1, wherein a temperature at an entire or part position of a vicinity of an inner wall of the combustion furnace becomes 800°C or more by means of the flame.

4. The combustion apparatus for the hydrocarbon based fuel according to claim 1, wherein the hydrocarbon based fuel is such that one or a plurality of kinds selected from among hydrocarbon based fuels composed of crude oil, heavy oil, kerosene, light oil, jet fuel, gasoline, naphtha, liquefied petroleum gas (LPG) and liquefied natural gas (LNG) are mixed.

5. A device provided with a combustion apparatus for a hydrocarbon based fuel according to any one of the preceding claims as a heat generating source.
